# EUROPÄISCHE PATENTSCHRIFT

(11) **EP 0 708 155 B1**
(45) Veröffentlichungstag und Bekanntmachung des Hinweises auf die Patenterteilung: **01.09.1999**
(21) Anmeldenummer: 95116068.8
(22) Anmeldetag: 12.10.1995
(51) Int. Cl.: C09C 3/12, C09C 3/06, C09B 67/00, C09C 1/64

(54) **Verfahren zur Herstellung von siliciumoxidbeschichteten Feststoffteilchen**
Process for manufacturing solic particles coated with silicon dioxide
Procédé de fabrication de particules solides revêtues d'oxyde de silicium

(30) Priorität: 21.10.1994 DE 4437752
(43) Veröffentlichungstag der Anmeldung: 24.04.1996
(73) Patentinhaber: BASF AKTIENGESELLSCHAFT, 67056 Ludwigshafen (DE)
(72) Erfinder: Mronga, Norbert, Dr., D-69221 Dossenheim (DE); Schmid, Raimund, Dr., D-67435 Neustadt (DE); Gomez, Juan Antonio Gonzalez, Dr., D-67063 Ludwigshafen (DE); Rieger, Reinhold, D-67071 Ludwigshafen (DE); Schlegel, Reinhold, D-67454 Hassloch (DE)

(56) Entgegenhaltungen:
- EP-A- 0 668 329
- PATENT ABSTRACTS OF JAPAN vol. 14, no. 95 (E-0892), 21.Februar 1990 & JP 01 300528 A (FUJITSU)

## Beschreibung

Die vorliegende Erfindung betrifft ein neues Verfahren zur Herstellung von siliciumoxidbeschichteten Feststoffteilchen durch Zersetzung flüchtiger Siliciumverbindungen mit Wasserdampf und/ oder Sauerstoff in Gegenwart der bewegten Feststoffteilchen.

Siliciumoxidbeschichtungen sind für viele Bereiche der Technik von Interesse. Insbesondere auf dem Farbmittelsektor gewinnen plättchenförmige Pigmente, bei denen die Substratteilchen mit Metalloxid- und/oder Metallschichten belegt sind, zunehmend an Bedeutung. Diese Glanz- oder Effektpigmente eignen sich für viele Anwendungen, beispielsweise für Automobillacke und andere dekorative Beschichtungen, für die Kunststoffeinfärbung, für Anstrichfarben, Druckfarben, insbesondere Sicherheitsdruckfarben, sowie für die Kosmetik.

Ihre optische Wirkung beruht auf der gerichteten Reflexion von Licht an überwiegend flächig ausgebildeten, zueinander parallel ausgerichteten, metallischen oder stark lichtbrechenden Pigmentteilchen (Metalleffektpigmente bzw. Perlglanzpigmente). Je nach Zusammensetzung der Pigmentplättchen, d.h. auch der Art der Beschichtung der Substratteilchen, erzeugen Interferenz-, Reflexions- und Absorptionsphänomene winkelabhängige Farb- und Helligkeitseindrücke.

Bei den oxidischen Beschichtungsmaterialien ist Siliciumoxid (vor allem Silicumdioxid) von besonderer Bedeutung, da Siliciumoxidschichten in Kombination mit metallischen Schichten insbesondere bei Metallpigmenten (metallischen Substratteilchen) sehr kräftige, attraktive Interferenzfarben ergeben.

Derartige Pigmente werden in der nicht vorveröffentlichten DE-A-44 05 492 beschrieben. Besonders hervorgehoben werden Aluminiumplättchen, die eine 50 bis 600 nm dicke Siliciumoxidschicht, eine 1 bis 25 nm dicke Metallschicht sowie gewünschtenfalls eine zusätzliche 5 bis 250 nm dicke Siliciumoxidschicht aufweisen.

Bei dem Herstellungsverfahren der DE-A-44 05 492 werden die Siliciumoxidschichten naßchemisch durch Hydrolyse organischer Siliciumverbindungen, insbesondere der Alkoholate wie Tetraethoxysilan, in Gegenwart eines organischen Lösungsmittels wie Isopropanol auf die metallischen Substratteilchen aufgebracht.

In der EP-A-571 836 wird die Möglichkeit, Metallplättchen durch Gasphasenzersetzung (chemical vapor deposition, CVD) von Siliciumtetrachlorid mit Wasserdampf mit Siliciumoxid zu belegen, erwähnt. Diese Methode ist jedoch insbesondere bei der Herstellung dickerer Siliciumoxidschichten problematisch, da die Substratteilchen in Gegenwart von Siliciumtetrachlorid zur Agglomeration neigen und daher nicht gleichmäßig mit Siliciumoxid beschichtet werden.

In der nicht vorveröffentlichten DE-A-44 14 079 wird ein weiteres CVD-Verfahren beschrieben, bei dem Aluminiumpigmente durch Zersetzung von stickstoffhaltigen, aber keine Alkanoyloxyreste enthaltenden Siliciumverbindungen, insbesondere von 3-Aminopropyltriethoxysilan, mit Siliciumoxid belegt werden.

Der Erfindung lag die Aufgabe zugrunde, ein wirtschaftliches Verfahren bereitzustellen, das auch die Herstellung dickerer Siliciumoxidbeschichtungen ermöglicht.

Demgemäß wurde ein Verfahren zur Herstellung von siliciumoxidbeschichteten Feststoffteilchen durch Zersetzung flüchtiger Siliciumverbindungen mit Wasserdampf und gegebenenfalls Sauerstoff in Gegenwart der bewegten Feststoffteilchen gefunden, welches dadurch gekennzeichnet ist, daß man als Siliciumverbindungen Silane verwendet, die mindestens einen Alkanoyloxyrest enthalten.

Geeignete Silane entsprechen insbesondere der Formel I

RₐSiX_{b}Y_{c} I

in der die Variablen folgende Bedeutung haben:
- R: Alkyl, bevorzugt C₁-C₁₀-Alkyl, besonders bevorzugt C₁-C₆-Alkyl, das durch Chlor substituiert sein kann, ein- oder mehrfach ungesättigt sein kann und dessen Kohlenstoffkette durch eine oder mehrere Iminogruppen oder Sauerstoffatome in Etherfunktion unterbrochen sein kann; Phenyl, das durch C₁-C₂-Alkyl substituiert sein kann, oder Wasserstoff;
- X: Alkoxy, bevorzugt C₁-C₆-Alkoxy;
- Y: Alkanoyloxy, bevorzugt C₂-C₃-Alkanoyloxy;
- a: 0 bis 3, bevorzugt 0 bis 2, besonders bevorzugt 0;
- b: 0 bis 3, bevorzugt 1 bis 3, besonders bevorzugt 2;
- c: 1 bis 4, bevorzugt 1 bis 3, besonders bevorzugt 2,
wobei die Summe a+b+c=4 ist und die Reste R für a>1, die Reste X für b>1 und die Reste Y für c>1 jeweils gleich oder verschieden sein können.

Als Reste R eignen sich im einzelnen z.B. Methyl, Ethyl, Propyl, Isopropyl, Butyl, Isobutyl, sec.-Butyl, tert.-Butyl, Pentyl, Isopentyl, sec.-Pentyl, tert.-Pentyl, Hexyl, 2-Methylpentyl, Heptyl, Octyl, 2-Ethylhexyl, Nonyl, Decyl und verzweigte Reste dieser Art sowie Vinyl, Phenyl, Methylphenyl und Dimethylphenyl. Bevorzugt sind Methyl, Ethyl, Propyl und Isopropyl.

Geeignete Alkoxyreste X können ebenfalls verzweigt und unverzweigt sein. Als Beispiele seien Methoxy, Ethoxy, Propoxy, Isopropoxy, Butoxy, Isobutoxy, sec.-Butoxy, tert.-Butoxy, Pentoxy, Isopentoxy, sec.-Pentoxy, tert.-Pentoxy, Hexoxy und 2-Methylpentoxy genannt. Bevorzugt sind Butoxyreste, insbesondere tert.-Butoxy.

Als Alkanoyloxyreste Y sind z.B. Acetoxy, Propionyloxy und Isopropionyloxy geeignet. Bevorzugt ist Acetoxy.

Besonders geeignet sind dabei die Silane, die bei Temperaturen ≤ 600°C, aus technischen Gründen insbesondere auch ≤ 300°C, einen ausreichend hohen Dampfdruck aufweisen, um eine einfache Verdampfung zu gewährleisten, und auch leicht mit Wasserdampf und/oder Luft zersetzt und als Oxid abgeschieden werden können. Selbstverständlich können auch Gemische verschiedener Silane eingesetzt werden.

Bevorzugte Silane enthalten vier organische Substituenten, besonders bevorzugt sind Silane, bei denen das Siliciumatom nur über Sauerstoff gebundene organische Reste, also Alkanoyloxygruppen (vor allem Acetoxygruppen) und insbesondere zusätzlich auch Alkoxygruppen, trägt.

Im einzelnen seien beispielhaft folgende Silane genannt: Tetraacetoxysilan, Methoxy-, Ethoxy-, Propoxy-, Isopropoxy-, Butoxy-, Isobutoxy-, sec.-Butoxy- und tert.-Butoxytriacetoxysilan, Dimethoxy-, Diethoxy-, Dipropoxy-, Diisopropoxy-, Dibutoxy-, Diisobutoxy-, Di-sec.-butoxy- und Di-tert.-butoxydiacetoxysilan und Trimethoxy-, Triethoxy-, Tripropoxy-, Triisopropoxy-, Tributoxy-, Triisobutoxy-, Tri-sec.-butoxy- und Tri-tert.-butoxyacetoxysilan sowie auch Silane, die verschiedene Alkoxyreste enthalten, z.B. Methoxyethoxydiacetoxysilan.

Bevorzugt sind z.B. Diisopropoxydiacetoxysilan und Diisobutoxydiacetoxysilan.

Ganz besonders bevorzugt ist Di-tert.-butoxydiacetoxysilan.

Beim erfindungsgemäßen Verfahren wird die Siliciumoxidbeschichtung durch Zersetzung der mit Hilfe eines Trägergases wie Stickstoff verdampften und in den Reaktor überführten Silane bevorzugt mit Wasserdampf und gegebenenfalls Luft (bzw. anderen Sauerstoff/ Inertgas-Gemischen) bei in der Regel 100 bis 600°C, vorzugsweise 150 bis 300°C, auf die in Bewegung gehaltenen Substratteilchen aufgebracht. Die Zersetzung der Silane kann auch nur mit Sauerstoff (bzw. Luft) vorgenommen werden; hierfür empfehlen sich dann höhere Temperaturen.

Je nach der gewünschten Dicke der aufzubringenden Siliciumoxidschicht können hierfür verschiedene Reaktoren zum Einsatz kommen.

Dünnere Siliciumoxidschichten (≤ etwa 50 nm) können in einem Einhalsrundkolben aus Quarzglas, der über einen Motor gedreht wird, mit Gaszu- und -ableitungen in der Drehachse versehen ist und von einem zweischaligen Klappofen beheizt wird, abgeschieden werden.

Im Prinzip läßt sich jeder beheizbare Mischer, der die Substratteilchen mittels entsprechender Einbauten schonend bewegt und eine Gaszu- und -ableitung gestattet, als Reaktor verwenden.

Für eine kontinuierliche Verfahrensführung im technischen Maßstab eignet sich z.B. auch ein Drehrohrofen, dem die Substratteilchen, die Silan/Trägergas-Mischung und Wasserdampf fortlaufend zugeführt werden.

Zur Herstellung besonders hochwertiger, dickerer Siliciumoxidschichten (≥ 50 nm) empfiehlt sich die Verwendung eines Wirbelschichtreaktors, wie er beispielsweise in der EP-A-45 851 beschrieben ist. Die Substratteilchen werden im Reaktor unter Fluidisierung (Verwirbelung) mit einem inerten Wirbelgas wie Stickstoff auf die gewünschte Reaktionstemperatur erhitzt, Silan und Wasserdampf (sowie gegebenenfalls Sauerstoff) werden dann mit Hilfe inerter Trägergasströme (vorteilhaft Teilströmen des Wirbelgases) aus vorgeschalteten Verdampfergefäßen über getrennte Düsen eingeleitet.

Um homogene, die Substratteilchen vollständig umhüllende, filmartige Siliciumoxidschichten zu erhalten, wird die Silankonzentration zweckmäßigerweise bei ≤ 5 Vol.-%, vorzugsweise ≤ 2 Vol.-%, bezogen auf die Gesamtgasmenge im Reaktor, gehalten.

Die zur Zersetzung erforderliche Menge Wasserdampf hängt von der Konzentration des Silans ab und sollte mindestens der stöchiometrisch zur Hydrolyse erforderlichen Menge entsprechen, bevorzugt ist jedoch die 10 bis 100fache Menge.

Enthält das Silan Alkyl- oder Phenylsubstituenten R, so empfiehlt sich die Anwesenheit von Sauerstoff bei der Zersetzung, wenn Kohlenstoffreste, die sich in der Regel bei der alleinigen Verwendung von Wasserdampf bilden, in der abgeschiedenen Siliciumoxidschicht vermieden werden sollen.

Auch hier sollte mindestens die zur Bildung von Kohlenmonoxid, Kohlendioxid und Wasser stöchiometrisch notwendige Menge Sauerstoff verwendet werden, vorzuziehen ist die 10- bis 100fache Menge.

Die bei der Zersetzung gebildeten Abgase - im Fall des bevorzugten, im Handel erhältlichen Di-tert.-butoxydiacetoxysilans entstehen tert.-Butanol und Essigsäure - können in einem Abgaswäscher problemlos aus der Abluft entfernt werden.

Das erfindungsgemäße CVD-Verfahren hat den großen Vorteil, daß direkt anschließend an die Siliciumoxidbelegung, nach Austausch der Reaktiongsgase und gegebenenfalls nach Temperaturregulierung, weitere, Metall- und/oder Metalloxidschichten auf die Substratteilchen aufgebracht werden können. Das Substratmaterial muß nicht zwischenisoliert oder gar getrocknet werden.

Nach abgeschlossener Belegung wird der Reaktor abgekühlt und das beschichtete Produkt ausgetragen.

Mit Hilfe des erfindungsgemäßen Verfahrens können alle Teilchen, die unter den Beschichtungsbedingungen stabil sind, vorteilhaft mit Siliciumoxid beschichtet werden.

Von besonderer Bedeutung ist das Verfahren für die Beschichtung anorganischer und organischer Pigmente, wobei insbesondere plättchenförmige Pigmente von Interesse sind, da sie bei weiterer Belegung z.B. mit Metallschichten attraktive Glanzpigmente ergeben.

Beispiele für bevorzugte Substratmaterialien sind plättchenförmiges Kupferphthalocyanin, silikatische Plättchen und vor allem Metallplättchen, die auch bereits mit Metalloxid- und/oder Metallbeschichtungen versehen sein können.

Als metallische Substrate kommen insbesondere alle für Metalleffektpigmente bekannten Metalle und Legierungen in Plättchenform in Betracht; z.B. sind neben Stahl, Kupfer und seinen Legierungen wie Messing und Bronzen vor allem Aluminium und seine Legierungen wie Aluminiumbronze geeignet.

Bevorzugt sind Aluminiumflakes, die in einfacher Weise durch Herausstanzen aus Aluminiumfolie oder nach gängigen Verdüsungs- und Mahltechniken herzustellen sind.

So sind beispielsweise Aluminiumpigmente geeignet, die nach dem sogenannten Hall-Verfahren in Testbenzin durch Naßmahlung hergestellt werden. Ausgangsmaterial ist ein atomisierter, spratziger Aluminiumgrieß, welcher in Kugelmühlen in Testbenzin und in Gegenwart eines Schmiermittels zu plättchenförmigen Teilchen verformt bzw. zerkleinert und anschließend klassiert wird.

Es können handelsübliche Produkte eingesetzt werden. Jedoch sollte die Oberfläche der Aluminiumteilchen weitgehend frei von Fetten oder anderen Belegmitteln sein. Diese Substanzen können zum Teil durch Lösungsmittelbehandlung oder besser, wie in der DE-A-42 23 384 beschriebenen, durch oxidative Behandlung entfernt werden.

Geeignete bereits beschichtete Metallsubstrate sind z.B. eisenoxidbeschichtete (EP-A-33 457) und titandioxidbeschichtete (EP-A-338 428) Aluminiumpigmente, die eine goldene bis rote Eigenfarbe bzw. zarte Pastellfarbtöne zeigen, sowie magnetisierbare Aluminiumpigmente, die eine Eisen-, Cobalt-, Nickel- oder γ-Fe₂O₃-Beschichtung aufweisen (nicht vorveröffentlichte DE-A-43 13 541 und 43 40 141).

Als silikatische Substrate kommen insbesondere helle bzw. weiße Glimmer in Betracht, wobei Schuppen von vorzugsweise naß vermahlenem Muskovit besonders bevorzugt sind. Selbstverständlich sind auch andere natürliche Glimmer wie Phlogopit und Biotit, künstliche Glimmer, Talk- und Glasschuppen geeignet.

Die Silikatplättchen können ebenfalls bereits mit (hochbrechenden) Metalloxiden wie Titan-, Zirkon-, Zink-, Zinn-, Chrom-, Eisenoxid und/oder Bismutoxychlorid beschichtet sein.

Bevorzugt sind Glimmerpigmente, die eine im wesentlichen aus Titandioxid bestehende und die weiteren genannten Oxide höchstens in untergeordneter Menge enthaltende Oxidbeschichtung aufweisen.

Metalloxidbeschichtete silikatische Pigmente sind allgemein bekannt und auch unter den Bezeichnungen Iriodin® (Merck, Darmstadt), Flonac® (Kemira Oy, Pori) oder Mearlin® (Mearl Corporation, New York) im Handel.

Mit Hilfe des erfindungsgemäßen Verfahrens können qualitativ hochwertige homogene, filmartige und zur Interferenz befähigte Siliciumoxidschichten in jeder gewünschten Dicke (z.B. 10 bis 800 nm) problemlos und in wirtschaftlicher Weise auf beliebige Substratmaterialien aufgebracht werden. Das Verfahren bietet damit auch einen vorteilhaften Herstellungsweg für die besonders farbstarken, in der nicht vorveröffentlichten DE-A-44 05 492 beschriebenen Metalleffektpigmente, die eine innere Siliciumoxidschicht und eine äußere Metallschicht (Eisen, Chrom, Wolfram oder bevorzugt Molybdän) sowie gewünschtenfalls weitere Metalloxidschichten aufweisen.

### Beispiele

Die in den Beispielen beschriebenen Beschichtungen von Aluminiumpigmenten wurden jeweils in einem von außen beheizbaren Wirbelschichtreaktor aus Glas mit einem Durchmesser von 16 cm und einer Höhe von 100 cm mit Glasfrittenboden und oben eingehängten, mit einem Stickstoff-Jet abreinigenden Filterstrümpfen und zwei seitlich oberhalb des Frittenbodens eingebrachten Düsen zur Gaseinleitung durchgeführt.
A) Beschichtung mit Siliciumoxid
   Dazu wurden x g Aluminiumpulver (Al 1: mittlerer Teilchendurchmesser 60 µm, BET-Oberfläche 1,5 m²/g; Al 2: mittlerer Teilchendurchmesser 20 µm, BET-Oberfläche 4,5 m²/g) unter Verwirbelung mit insgesamt 1420 l/h Stickstoff auf 200°C erhitzt. Ein Teil des Wirbelgases (400 l/h Stickstoff) wurde durch eine auf 50°C temperierte Verdampfervorlage mit Wasser geleitet. Zur Entfettung des Aluminiumpulvers wurden dem Wirbelgas innerhalb 1 h 140 l Luft zudosiert.
   Anschließend wurden weitere 400 l/h des Wirbelgases über eine auf 160°C (im Fall von Al 1) bzw. 120°C (im Fall von Al 2) erwärmte Vorlage mit Di-tert.-butoxydiacetoxysilan geleitet. Portionsweise wurden so jeweils 25 (bzw. auch 20) ml des Silans, insgesamt y ml, in t₁ h in den Reaktor überführt.
   Das Aluminiumpulver sah nach der Beschichtung mit Siliciumoxid immer nahezu unverändert aus. Rasterelektronische Aufnahmen zeigten stets eine praktisch quantitative (keine zusätzlichen SiO₂-Partikel), filmartige SiO₂-Abscheidung. Die an einer Pigmentprobe ermittelten SiO₂-Gehalte sind in der Tabelle aufgeführt.
B) Beschichtung mit Molybdän
   Anschließend wurde das mit SiO₂ beschichtete Aluminiumpulver unter Verwirbelung mit insgesamt 1800 l/h Stickstoff auf 220°C erhitzt. Ein Teilstrom des Wirbelgases von 400 l/h wurde jetzt über eine auf 70°C temperierte Vorlage mit Molybdänhexacarbonyl geleitet (die Silan- und die Wasservorlage wurden vorher entfernt). In t₂ h wurden so z g Mo(CO)₆ im Reaktor zu Molybdän und Kohlenmonoxid zersetzt.
   Nach beendeter Molybdänabscheidung wurde den Wirbelgasen beim Abkühlen zur Passivierung der Molybdänoberfläche etwas Luft zugesetzt.
   Weitere Einzelheiten zu diesen Versuchen sowie deren Ergebnisse sind in der folgenden Tabelle zusammengestellt.

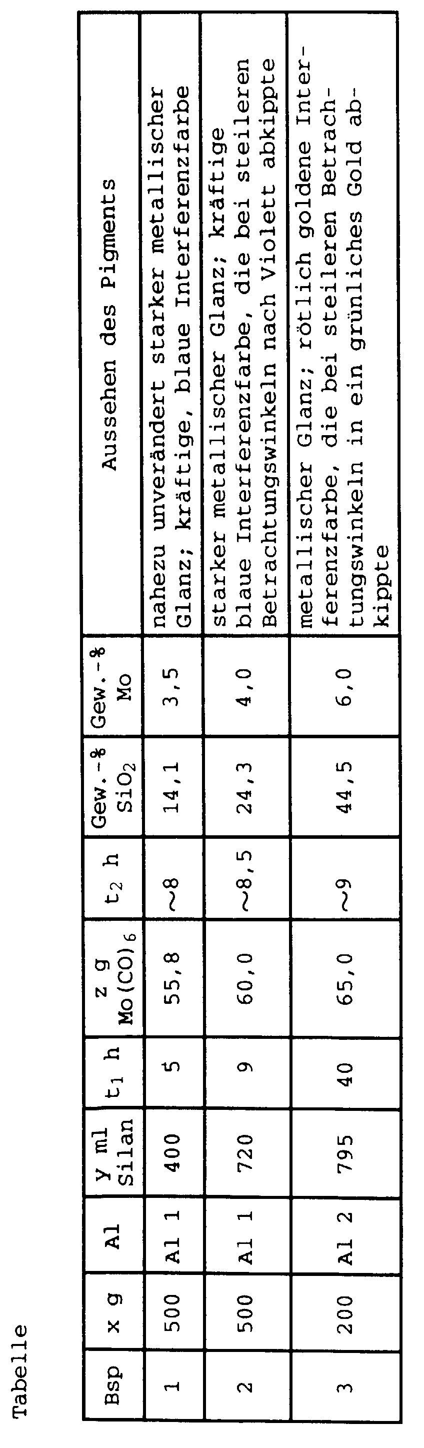

## Patentansprüche

1. Verfahren zur Herstellung von siliciumoxidbeschichteten Feststoffteilchen durch Zersetzung flüchtiger Siliciumverbindungen mit Wasserdampf und/oder Sauerstoff in Gegenwart der bewegten Feststoffteilchen, dadurch gekennzeichnet, daß man als Siliciumverbindungen Silane verwendet, die mindestens einen Alkanoyloxyrest enthalten.

2. Verfahren nach Anspruch 1, dadurch gekennzeichnet, daß man Silane verwendet, die mindestens einen Alkanoyloxyrest und mindestens einen Alkoxyrest enthalten.

3. Verfahren nach Anspruch 1 oder 2, dadurch gekennzeichnet, daß man Silane verwendet, die mindestens einen C₂-C₃-Alkanoyloxyrest und mindestens einen C₁-C₆-Alkoxyrest enthalten.

4. Verfahren nach den Ansprüchen 1 bis 3, dadurch gekennzeichnet, daß man Silane verwendet, die zwei Alkanoyloxyreste und zwei Alkoxyreste enthalten, wobei die Alkanoyloxyreste und die Alkoxyreste jeweils gleich oder verschieden sein können.

5. Verfahren nach den Ansprüchen 1 bis 4, dadurch gekennzeichnet, daß man Di-tert.-butoxydiacetoxysilan verwendet.

6. Verfahren nach den Ansprüchen 1 bis 3, dadurch gekennzeichnet, daß man Silane verwendet, die zusätzlich einen oder zwei gleiche oder verschiedene Alkylreste, die bis zu 10 Kohlenstoffatome enthalten und durch Chlor substituiert sein können, deren Kohlenstoffkette durch eine oder mehrere Iminogruppen oder Sauerstoffatome in Etherfunktion unterbrochen sein kann und die ein- oder mehrfach ungesättigt sein können, oder Phenylreste, die durch C₁-C₂-Alkyl substituiert sein können, enthalten.

7. Verfahren nach den Ansprüchen 1 bis 6, dadurch gekennzeichnet, daß man es im Wirbelschichtreaktor durchführt.

8. Verfahren nach den Ansprüchen 1 bis 7, dadurch gekennzeichnet, daß man es zur Beschichtung von anorganischen und organischen Pigmenten mit Siliciumoxid anwendet.

9. Verfahren nach den Ansprüchen 1 bis 8, dadurch gekennzeichnet, daß man es zur Beschichtung von Metallplättchen, silikatischen Plättchen und/oder Kupferphthalocyanin-Plättchen, die bereits mit anderen Metalloxiden und/oder Metallen beschichtet sein können, mit Siliciumoxid anwendet.

10. Verfahren nach den Ansprüchen 1 bis 9, dadurch gekennzeichnet, daß man die Feststoffteilchen nach dem Aufbringen der Siliciumoxidschicht noch mit Metall beschichtet.

## Claims

1. A process for producing silicon oxide-coated solid particles by decomposing volatile silicon compounds with water vapor and/or oxygen in the presence of the agitated solid particles, which comprises using silicon compounds comprising silanes containing at least one alkanoyloxy radical.

2. A process as claimed in claim 1, wherein the silanes used contain at least one alkanoyloxy radical and at least one alkoxy radical.

3. A process as claimed in claim 1 or 2, wherein the silanes used contain at least one C₂-C₃-alkanoyloxy radical and at least one C₁-C₆-alkoxy radical.

4. A process as claimed in any of claims 1 to 3, wherein the silanes used contain two alkanoyloxy radicals and two alkoxy radicals, which alkanoyloxy radicals and alkoxy radicals can respectively be identical or different.

5. A process as claimed in any of claims 1 to 4, wherein di-tert-butoxydiacetoxysilane is used.

6. A process as claimed in any of claims 1 to 3, wherein the silanes used additionally contain one or two identical or different alkyl radicals which contain up to 10 carbon atoms and may be substituted by chlorine and whose carbon chain may be interrupted by one or more imino groups or oxygen atoms in the ether function and which may be monounsaturated or polyunsaturated, or phenyl radicals which may be substituted by C₁-C₂-alkyl.

7. A process as claimed in any of claims 1 to 6 in a fluidized bed reactor.

8. A process as claimed in any of claims 1 to 7 for applying a coating of silicon oxide to inorganic and organic pigments.

9. A process as claimed in any of claims 1 to 8 for applying a coating of silicon oxide to metal platelets, silicatic platelets and/or copper phthalocyanine platelets which may have already been coated with other metal oxides and/or metals.

10. A process as claimed in any of claims 1 to 9, further comprising, after the application of the silicon oxide layer, additionally coating the solid particles with metal.

## Revendications

1. Procédé de préparation de particules solides enduites d'oxyde de silicium par décomposition de composés volatils du silicium à l'aide de vapeur d'eau et/ou d'oxygène en présence des particules solides mises en mouvement, caractérisé en ce que l'on utilise des silanes contenant au moins un reste alcanoyloxy, en tant que composés du silicium.

2. Procédé selon la revendication 1, caractérisé en ce que l'on utilise des silanes contenant au moins un reste alcanoyloxy et au moins un reste alcoxy.

3. Procédé selon la revendication 1 ou 2, caractérisé en ce que l'on utilise des silanes contenant au moins un reste alcanoyloxy en C₂-C₃ et au moins un reste alcoxy en C₁-C₆.

4. Procédé selon l'une quelconque des revendications 1 à 3, caractérisé en ce que l'on utilise des silanes contenant deux restes alcanoyloxy et deux restes alcoxy, où les restes alcanoyloxy et alcoxy peuvent chacun être identiques ou différents.

5. Procédé selon l'une quelconque des revendications 1 à 4, caractérisé en ce que l'on utilise des di-tert.-butoxydiacétoxysilanes.

6. Procédé selon l'une quelconque des revendications 1 à 3, caractérisé en ce que l'on utilise des silanes qui contiennent en outre un ou deux restes alkyle identiques ou différents qui peuvent contenir jusqu'à 10 atomes de carbone et peuvent être substitués par des atomes de chlore, dont la chaîne carbonée peut être interrompue par un ou plusieurs groupements imino ou atomes d'oxygène en fonction éther et qui peuvent être une ou plusieurs fois insaturés, ou des groupements phényle pouvant être substitués par des groupements alkyle en C₁-C₂.

7. Procédé selon l'une quelconque des revendications 1 à 6, caractérisé en ce que l'on opère dans un réacteur à lit fluidisé.

8. Procédé selon l'une quelconque des revendications 1 à 7, caractérisé en ce qu'on l'applique au revêtement de pigments inorganiques et organiques avec de l'oxyde de silicium.

9. Procédé selon l'une quelconque des revendications 1 à 8, caractérisé en ce qu'on l'applique au revêtement avec de l'oxyde de silicium de plaquettes métalliques, de plaquettes silicatées et/ou de plaquettes de cuprophtalocyanine, qui sont déjà revêtues avec d'autres oxydes métalliques et/ou d'autres métaux.

10. Procédé selon l'une quelconque des revendications 1 à 9, caractérisé en ce que l'on enduit en outre les particules solides avec du métal, après le dépôt de la couche d'oxyde de silicium.
